Europäisches Patentamt

(19) European Patent Office

Office européen des brevets

(11) Veröffentlichungsnummer: **0 221 251**
**B1**

(12) **EUROPÄISCHE PATENTSCHRIFT**

(45) Veröffentlichungstag der Patentschrift: **27.12.90**

(51) Int. Cl.⁵: **G 01 R 15/10**

(21) Anmeldenummer: **86110536.9**

(22) Anmeldetag: **30.07.86**

(54) **Verfahren zur Fehlerkompensation für Messwertaufnehmer mit nicht linearen Kennlinien, sowie Anordnung zur Durchführung des Verfahrens.**

(30) Priorität: **30.08.85 DE 3531118**

(43) Veröffentlichungstag der Anmeldung:
**13.05.87 Patentblatt 87/20**

(45) Bekanntmachung des Hinweises auf die
Patenterteilung:
**27.12.90 Patentblatt 90/52**

(84) Benannte Vertragsstaaten:
**DE FR GB IT**

(56) Entgegenhaltungen:
**GB-A-1 501 877**
**GB-A-2 047 412**
**US-A-4 000 463**
**US-A-4 149 120**

(73) Patentinhaber: **Micro-Epsilon Messtechnik GmbH & Co. Kommanditgesellschaft Königbacher Strasse 15 D-8359 Ortenburg-Dorfbach (DE)**

(72) Erfinder: **Hrubes, Franz, Dipl.-Ing. Maierhof 102 D-8399 Rotthalmünster (DE)**

(74) Vertreter: **Ullrich, Thurmod, Dr. Patentanwälte Dr. Ullrich - Dr. Naumann Gaisbergstrasse 3 D-6900 Heidelberg (DE)**

Courier Press, Leamington Spa, England.

**Beschreibung**

Die Erfindung betrifft ein Verfahren zur Linearisierung einer nicht linearen, gleichmäßig stetigen Kennlinie eines Meßwertaufnehmers mit einer rechnerunterstützten Meßschaltung sowie eine Vorrichtung zur Durchführung des Verfahrens.

In der Meßtechnik wird gefordert, daß der Ausgangswert eines Meßaufnehmers linear proportional dem zu messenden Wert ist. Ist dies nicht der Fall, so werden Kompensationsschaltungen vorgesehen, mit deren Hilfe die Kennlinie des Meßwertaufnehmers linearisiert wird. Derartige Kompensationsschaltungen sind z.B. Diodennetzwerke, mit denen die nicht lineare Kennlinie als Polygonzug mit invertierter Krümmung derart nachgebildet wird, daß das nicht lineare Eingangssignal des Diodennetzwerkes am Ausgang als lineares Signal erscheint. Bei einer anderen Ausführungsform einer derartigen Linearisierungs- bzw. Kompensierungsschaltung wird das Ausgangssignal des Meßwertaufnehmers mit einer logarithmischen Kennlinie einer nachfolgenden Schaltung multipliziert und dadurch linearisiert. Beide Verfahren haben den Nachteil, daß die Linearisierung nur mit einem ungeheuer großen Abgleichaufwand vorgenommen werden kann, wobei darüber hinaus der Abgleich von einer geschulten Person durchgeführt werden muß. Weiterhin ist mit den vorgenannten bekannten Verfahren nur eine sehr beschränkte Kompensation möglich, so daß ein in vielen Fällen untragbar großer unvermeidbarer Meßfehler übrig bleibt.

In der US—A—4,149,120 ist ein Verfahren zur Linearisierung einer nicht linearen, gleichmäßig stetigen Kennlinie eines Meßwertaufnehmers beschrieben, bei dem von zwei Funktionsgeneratoren ein linear ansteigendes bzw. ein nicht linear ansteigendes Signal geliefert werden. Die nicht lineare Kennlinie entspricht dabei der Kennlinie des zu linearisierenden Meßsignals. Bei Übereinstimmung des nicht linearen Ausgangssignals mit dem Meßsignal wird der dann ausgegebene Wert von dem linearen Funktionsgenerator gespeichert. Die nicht lineare Kennlinie wird gebildet durch Verändern eines Teilerverhältnisses eines digitalen Teilers, der Taktimpulse empfängt. Bei diesem Verfahren wird also eine schrittweise lineare Annäherung an die Kennlinie des Meßsignals erreicht. Es erfolgt keine direkte Wertezuordnung in dem Speicher, sondern es werden Teilungsfaktoren für den Funktionsgenerator gespeichert. Die Teilungsfaktoren werden in einem programmierbaren Speicher vorab gespeichert. Damit müssen nacheinander mehrere Teilungsfaktoren aus dem Speicher ausgelesen werden, bis das Ausgangssignal des nicht linearen Funktionsgenerators den gleichen Wert hat wie das Meßsignal. Dies ist äußerst zeitraubend, so daß diese Art der Linearisierung praktisch nur bei in groben Schritten durchgeführtem Abgleichen in Frage kommt. Nachteilig ist, daß die Linearisierung nur einmal herstellerseitig durchgeführt wird; denn die tatsächliche Kennlinie des Meßsignals kann je nach Meßobjekt und Umgebungseinflüssen von Fall zu Fall verschieden sein.

Es ergibt sich also das Problem, daß für den Abgleich häufig nicht das ausreichend geschulte Personal zur Verfügung steht, um die Abgleichsarbeiten durchzuführen. Sobald der Meßwertaufnehmer für ein anderes Meßobjekt eingesetzt werden soll, muß die gesamte Abgleichprozedur wiederholt werden.

Aufgabe der Erfindung ist es, ein Verfahren zur Linearisierung einer nicht linearen, gleichmäßig stetigen Kennlinie eines Meßwertaufnehmers mit einer rechnerunterstützten Meßschaltung anzugeben, bei dessen Anwendung der unvermeidbare Meßfehler geringer als bisher ist, und welches dennoch leicht durchzuführen ist. Dabei soll die Möglichkeit bestehen, die Linearisierung entsprechend dem Meßobjekt, für das der Meßwertaufnehmer eingesetzt wird, vorzunehmen. Weiterhin soll eine Vorrichtung zur Durchführung dieses Verfahrens angegeben werden.

Gelöst wird diese Aufgabe erfindungsgemäß bei einem Verfahren der eingangs genannten Art durch die im Anspruch 1 angegebenen Schritte und bei der Vorrichtung der eingangs genannten Art durch die im Anspruch 7 angegebenen Merkmale. Die Kennlinie des Meßwertaufnehmers wird so eingestellt, daß mittels des Rechners anhand einer Potenzfunktion der Grundgleichung

$$Y = A + B \left[ \frac{x+w}{1} \right]^D \qquad \text{(Gleichung G)}$$

worin Y dem linearisierten Signal und X dem nicht linearen Meßwert entsprechen eine exakte Linearisierung nachgebildet wird, wobei zweckmäßigerweise die Kennlinie des Meßwertaufnehmers über den Meßbereich beträchtlich geändert wird, um einen guten Signal/Rauschabstand zu erhalten.

Der für diese Kennlinie charakteristische Wert D wird dabei einmalig ermittelt und für den entsprechenden Meßwertaufnehmer fest vorgegeben. Die Werte A, B und W werden durch ein Gleichungssystem mit 3 Gleichungen (Regressionsverfahren) und einem zusätzlichen Iterationsverfahren zweckmäßigerweise so ermittelt, daß sich die 3 Schnittpunkte der Ausgangskennlinie und der Linearisierungskennlinie am Meßanfang, in der Mitte und am Ende des Meßbereichs befinden. Die Werte A, B und W können am tatsächlichen Meßort durch Umgebungseinflüsse und unterschiedliche Materialien der Meßobjekte von den werksseitig ermittelten Werten abweichen. Deshalb werden in einem Schritt b am Verwendungsort mit dem eingebauten Meßwertaufnehmer mindestens drei Kalibrierungsmessungen mit definierten Kalibrierungsmeßwerten vorgenommen, die im wesentlichen den Meßbereich äquidistant überspannen, in einem Schritt c mit den resultierenden Kalibrierungsmeßergebnissen und der gespeicherten Konstanten D die Gleichung (G) zur Bestimmung der Konstanten A, B und W gelöst und die Konstanten A, B und W gespeichert und in einem Schritt d bei jeder darauffolgenden Betriebsmessung das tatsächliche Meßergebnis als X-Wert eingesetzt und den dazugehörigen Y-Wert als fehlerkompensiertes Meßergebnis ausgegeben.

Durch die Verwendung der oben angegebenen Kompensationsgleichung (G) ergibt sich eine besonders geringe Abweichung der Kennlinie vom angestrebten linearen Verlauf, da diese Funktion durch Variation nur sehr weniger Parameter in weiten Bereichen einen im wesentlichen beliebig krümmbaren Verlauf aufweist. Voraussetzung hierfür ist selbstverständlich, daß der Kennlinienverlauf des Meßwertaufnehmers gleichmäßig stetig ist, diese Bedingung kann jedoch zumindest bereichsweise für alle Meßwertaufnehmer erfüllt werden.

Die Krümmung der Kennlinie, die sich im Exponenten D der Gleichung (G) ausdrückt, ist im allgemeinen für die Meßwertaufnehmer charakteristisch. Dies gilt insbesondere für Meßwertaufnehmer, die nach dem Wirbelstromprinzip den Abstand einer leitenden Fläche gegenüber einer in einem Schwingkreis angeordneten Meßspule messen. In diesem Fall ist dann nämlich der Exponent D charakteristisch für eine bestimmte Bauform des Meßwertaufnehmers, so daß für einen bestimmten Meßaufnehmertyp der Exponent D nur ein einziges Mal (z.B. durch curve fitting) bestimmt werden muß. Dieser dem Meßwertaufnehmer zugehörige Wert kann dann bei Verwendung des Meßwertaufnehmers dem Rechner eingegeben werden.

Am Verwendungsort wird dann der Meßwertaufnehmer eingebaut und es werden Kalibrierungsmessungen mit definierten Kalibrierungsmeßwerten vorgenommen, wobei in etwa einmal der Minimalabstand, einmal der maximale Abstand und einmal der mittlere Abstand (bei einem Abstandsmeßwertaufnehmer) mittels einer Lehre eingestellt werden. Mit diesen drei Meßwerten sowie der bekannten Konstante D kann dann die Gleichung (G) nach A, B und W aufgelöst werden, so daß man die Werte A, B und W erhält. Auch dieser Vorgang wird vom Rechner vorgenommen.

Die Werte A, B, und W werden gespeichert.

Bei jeder darauffolgenden Messung kann dann der Ausgangswert des Meßwertaufnehmers, der in einem nicht linearen Verhältnis zum tatsächlichen Meßwert steht, anhand der Gleichung (G) korrigiert werden, so daß man den fehlerkompensierten Wert erhält. Durch diese Art der Fehlerkompensation ist sichergestellt, daß die Linearisierung bzw. die Fehlerkorrektur selbst keine weiteren Fehler mehr mit sich bringt, wie dies bei Verwendung von Diodennetzwerken etc. durch Driftphänomene immer der Fall ist.

Weiterhin ist es durch das erfindungsgemäße Verfahren, bei dem die Linearisierung mit wenigen Schritten auch vom Nicht-Fachmann durchgeführt werden kann, möglich, den Meßwertaufnehmer ohne größeren Aufwand an einer anderen Stelle zu einem anderen Zweck zu verwenden und wieder der Umgebung entsprechend, die im allgemeinen selbst wieder einen Einfluß auf die Kennlinie des Meßwertaufnehmers hat, zu korrigieren. Umfangreiche Einstellmaßnahmen wie bei Diodennetzwerken etc., die nur vom Fachmann vorgenommen werden können, sind somit nicht erforderlich.

Eine bevorzugte Ausführungsform des erfindungsgemäßen Verfahrens zeichnet sich dadurch aus, daß man nach dem Bestimmen der Konstanten A, B und W bzw. nach dem Speichern dieser Konstanten in einem weiteren Schritt eine Vielzahl von Lösungspunkten der Gleichung (G) in aufeinanderfolgenden Speicheradressen speichert und bei jeder darauffolgenden Messung das jeweilige tatsächliche Meßergebnis dem nächstliegenden Speicherwert zuordnet und die Speicheradresse als dem Wert x proportionalen Wert ausgibt. Dadurch, daß die Gleichung nicht für jeden eingesetzten Meßwert gelöst werden muß, was eine gewisse Rechenzeit erfordert, ist eine erhebliche Steigerung der erzielbaren Meßfrequenz erreichbar. Der Rechner muß hierbei lediglich den Meßwert digitalisieren, auf- oder abrunden und die dem Meßwert entsprechende Speicheradresse heraussuchen. Der Inhalt der Speicheradresse gibt dann den fehlerkompensierten Meßwert bzw. eine diesem proportionale Größe an.

Vorzugsweise wird beim vorstehend angegebenen Verfahren der Meßbereich nur relativ grob unterteilt, wobei man dann entsprechend der Lage des tatsächlichen Meßwertes zwischen zwei gespeicherten Punkten den kompensierten Wert interpoliert. Ein derartiges Interpolationsverfahren beansprucht nur wenig Rechenzeit, die Auflösung des Meßsystems wird jedoch wesentlich erhöht, ohne zuviel Speicherplatz zu benötigen.

Wenn der Meßwert von einer Quelle gespeist wird, wie z.B. der oben erwähnte Wirbelstromaufnehmer, so stellt sich das Problem, daß auch der Quellenausgang Schwankungen zeigt, z.B. eine Langzeitdrift oder eine Temperaturdrift. Diese Fehler setzen sich über den Meßwertaufnehmer durch das gesamte Meßsystem fort und verfälschen das Meßergebnis zusätzlich. Vorzugsweise wird in diesem Fall das Verfahren dahingehend abgeändert, daß man nach dem Speichern der Konstanten A und B bzw. nach dem Speichern der Punkte der Gleichung (G) nacheinander zwei verschiedene Kalibrierungsimpedanzen anstelle des Meßwertaufnehmers an die Meßschaltung ankoppelt, die so bemessen sind, daß die Meßergebnisse bei angekoppelten Meßimpedanzen im wesentlichen in den Randzonen des Meßbereiches liegen, daß man die beiden Kalibrierungsimpedanzmeßwerte speichert und daß man während der eigentlichen Betriebsmessungen zwischen einzelnen Betriebsmessungen die beiden Kalibrierungsimpedanzen ankoppelt, die erhaltenen Kalibrierungsimpedanzmeßwerte mit den gespeicherten Kalibrierungsmeßwerten vergleicht, und anhand des Vergleichs entweder die gespeicherten Werte A, B und W der gesamten Meßanordnung korrigiert, indem man die Gleichung (G) für jeden Meßwert neu löst, oder—vorzugsweise—die gespeicherten Lösungspunkte korrigiert, indem man die Meßwerte auf die ursprünglich beim Kalibrierungsvorgang bestimmte Kurve zurückrechnet, d.h. Null-Punkts- und Proportionalitätsveränderungen ausgleicht, und somit die Werte A, B und W beibehalten kann. Somit wird durch die Einschaltung der Kalibrierungsimpedanz, die sehr temperatur- und langzeitstabil und dennoch kostengünstig erhältlich sind, ein Abgleich des gesamten Systems einschließlich der Quelle hinsichtlich des Nullpunktes und des Verstärkungsfaktors erreicht. Dem Umstand, daß in vielen Fällen die Kennlinien der Meßwertaufnehmer temperaturabhängig sind, wird dadurch Rechnung getragen, daß man bei einer weiteren bevorzugten Ausführungsform des Verfahrens werksseitig den Temperaturgang der Ausgangskennlinie bestimmt und mindestens punktweise speichert. Während der Betriebsmessungen wird dann die tatsächliche Temperatur des Meßwertaufnehmers detektiert, woraufhin man anhand des Ergebnisses und der gespeicherten Temperaturkennlinienpunkte das ausgegebene Meßergebnis korrigiert. Der Temperaturgang ist hierbei wieder für den Typ des Meßwertaufnehmers charakteristisch, so daß auch der Temperaturgang nur einmal werksseitig bestimmt werden muß und dann je nach verwendetem Meßwertaufnehmer am Einsatzort dem Rechner eingegeben werden kann. Je nach dem wie sich die Kennlinie mit der Temperatur ändert, genügt hierbei die Speicherung von Proportionalitätsfaktoren, das Meßergebnis wird also nur mit einem Faktor multipliziert, oder man speichert entsprechend viele Punkte, wenn die Temperatur in einem nicht linearen Zusammenhang mit dem Meßwert steht. Anhand dieser gespeicherten Punkte wird dann das Meßergebnis je nach Meßwert mit entsprechenden, aber voneinander verschiedenen Faktoren multipliziert. Zwischen den einzelnen Punkten wird vorteilhafterweise wieder interpoliert.

Da sich normalerweise die Temperatur nur relativ langsam ändert, wird bei einer weiteren bevorzugten Ausführungsform der Erfindung die tatsächliche Temperatur nur relativ selten abgetastet und der Satz Lösungspunkte der Gleichung (G) dann entsprechend korrigiert, wenn sich die momentane Temperatur gegenüber der bei der letzten Messung festgestellten Temperatur um einen wesentlichen Betrag geändert hat.

Mit Hilfe dieses Verfahrens, bei dem auch der Temperaturgang des Meßwertaufnehmers mit kompensiert wird bzw. der daraus resultierende Meßfehler kompensiert wird, ist es möglich, die Langzeitstabilität des Meßsystems weiter erheblich zu steigern. In diesem Fall werden nämlich die normalerweise schon durch den Tag/Nachtzyklus auftretenden Temperaturschwankungen bzw. deren Einflüsse auf das Meßergebnis eliminiert.

Wie bei der Temperaturmessung bzw. Kompensation ist es selbstverständlich auch möglich, das Einschalten der Kompensationswiderstände nur relativ selten durchzuführen, da sich Null-Punkt und Verstärkung ebenfalls nur relativ langsam ändern. Vorzugsweise läßt man hierbei während der Betriebsmessung die Kompensationsberechnung (im Rechner) im Hintergrund ablaufen.

Zur Durchführung des Verfahrens eignet sich ein Rechner oder Mikroprozessor in der üblichen Ausstattung, der über einen A/D-Wandler Meßwerte erfassen kann. In jedem Fall muß aber die Rechengeschwindigkeit so hoch sein, daß zwischen Aufnahme eines Meßwertes und Wiedergabe desselben nur eine hinreichend kurze Zeit verstreicht. Ansonsten ist eine den üblichen Anforderungen entsprechende Meßfrequenz mit dem erfindungsgemäßen Verfahren nicht erzielbar.

Eine Vorrichtung zur Durchführung des Verfahrens, bei dem Kalibrierungsimpedanzen an die Meßschaltung angekoppelt werden, weist einen elektrisch steuerbaren Umschalter auf, zum selektiven Verbinden eines ersten Poles mit zweiten bis vierten Polen, an denen der Meßwertaufnehmer bzw. die Kalibrierungsimpedanzen angeschlossen sind, eine Impedanz zwischen dem Oszillator und dem ersten Pol des Umschalters, einen Demodulator, dessen Eingang mit dem ersten Pol des Umschalters und dessen Ausgang zumindest zeitweise mit einem A/D-Wandler verbunden ist, einen Mikroprozessor, dessen Dateneingabeschnittstelle mit dem A/D-Wandler verbunden ist und der mindestens eine Steuersignalausgangsleitung aufweist, die mit dem Steuereingang des Umschalters verbunden ist. Unter "Demodulator" ist hierbei auch ein Verstärker zu sehen, wenn das Signal des Meßwertaufnehmers ein verarbeitbares, z.B. ein Gleichstromsignal ist.

Mit dieser Vorrichtung ist es auf besonders einfache Weise möglich, die Speiseamplitude der Quelle zu erfassen bzw. deren Änderungen mit zu kompensieren und dabei gleichzeitig die Null-Punkt- und Verstärkungsdrift der gesamten Elektronik zu kompensieren. Auf diese Weise ist es möglich, den Demodulator oder auch den A/D-Wandler relativ einfach, ohne Temperatur- und Langzeitdriftkompensation auszugestalten, da diese Fehler automatisch mit kompensiert werden. Es ist lediglich notwendig, die Kalibrierungsimpedanz und die Impedanz zwischen Quelle und Umschalter stabil auszuführen.

Ein weiterer Vorteil der oben beschriebenen Anordnung besteht darin, daß auch eine Änderung der Belastung der Quelle zur Speisung des Meßwertaufnehmers kompensiert wird. Eine derartige Änderung tritt z.B. dann auf, wenn man mehrere Meßwertaufnehmer mit einer einzigen Quelle speist. Bei den bisher bekannten Linearisierungsnetzwerken mußte die Quelle dann entsprechend nachgeregelt werden, um wieder auf den vorgegebenen, der Linearisierungskennlinie entsprechenden Wert gebracht zu werden. Mit der vorliegenden Erfindung ist dies nicht notwendig. Es ist vielmehr so, daß es die vorliegende Erfindung ermöglicht, eine ganz einfache Quelle—im Fall des Wirbelstromaufnehmers einen einfachen Quarz-Oszillator in CMOS-Logik mit nachgeschaltetem Tiefpaß und Transistor-Pufferstufe—zu verwenden, da auch bei Änderungen des Quellen- bzw. Oszillatorsignals die linearisierte Spannung konstant bleibt.

Weiterhin ergibt sich der Vorteil, daß auch Einflüsse der Versorgungsleitungen unberücksichtigt bleiben können, die bei üblichen Meßwertaufnehmern hoher Präzision sehr aufwendig ausgestaltet sein müssen.

Im folgenden wird eine bevorzugte Ausführungsform der erfindungsgemäßen Vorrichtung anhand von Abbildungen näher beschrieben. Hierbei zeigt

Fig. 1 ein Blockschaltbild einer bevorzugten Ausführungsform der Erfindung, und

Fig. 2 typische nicht lineare Kennlinien.

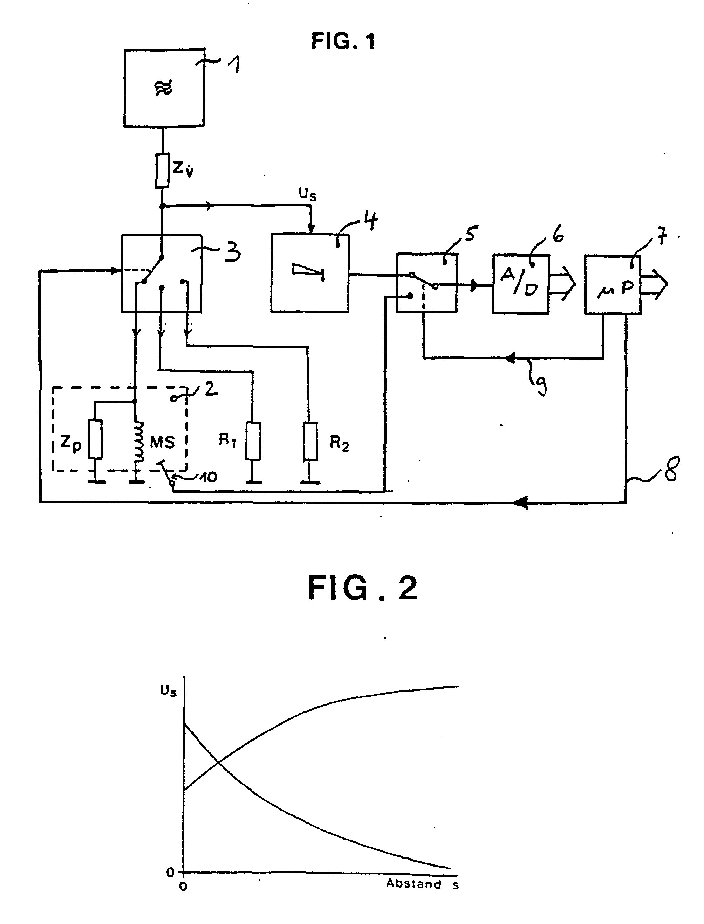

In Fig. 1 ist eine Anordnung gezeigt, mit deren Hilfe die nicht lineare Eingangs/Ausgangskennlinie eines Wirbelstrommeßwertaufnehmers 2 linearisiert werden kann.

Wie aus Fig. 1 hervorgeht, ist eine Quelle 1, ein Oszillator, über eine Impedanz $Z_v$ mit dem einen Pol eines elektrisch steuerbaren Umschalters 3 verbunden. Der Umschalter 3 kann den einen Pol der Impedanz $Z_v$ wahlweise mit einem von drei Ausgangspolen verbinden. Einer der Ausgangspole ist mit dem Wirbelstrommeßwertaufnehmer 2 verbunden, dessen Ersatzschaltbild mit der Parallelschaltung aus einer Impedanz $Z_p$ und einer Induktivität MS beschrieben werden kann. Die beiden anderen Ausgangspole des Umschalters 3 sind mit Widerständen $R_1$ und $R_2$ verbunden, die ihrerseits—ebenso wie der Meßwertaufnehmer 2—mit ihren anderen Polen auf Masse liegen. Zweckmäßigerweise wird $Z_v$ und $M_s$ mit $Z_p$ so gewählt, daß sich das Meßsignal über den Meßbereich bedeutend und gleichmäßig stetig ändert.

Zwischen der Impedanz $Z_v$ und dem Umschalter 3 wird das Meßsignal $U_s$ abgegriffen und an den Eingang eines Demodulators 4 geführt. Der Ausgang des Demodulators 4 wird über einen weiteren Umschalter 5 zumindest zeitweise mit einem A/D-Wandler 6 verbunden, der die demodulierten Werte digitalisiert und dem Mikroprozessor 7 übergibt.

Der Umschalter 5 am Eingang des A/D-Wandlers 6 schaltet diesen Eingang zwischen dem Ausgang des Demodulators 4 und dem Ausgang eines Temperaturfühlers 10 hin und her, der die Temperatur am Meßwertaufnehmer 2 abtastet. Zur Steuerung der Umschaltung dient hierbei die Verbindungsleitung 9 zwischen dem Mikroprozessor 7 und dem Umschalter 5.

Vom Mikroprozessor 7 führt eine weitere Steuerleitung 8 zum Umschalter 3, so daß der Mikroprozessor 7 die Verbindung der Quelle (über die Impedanz $Z_v$) mit dem Meßwertaufnehmer 2, dem Widerstand R1 oder dem Widerstand R2 steuern kann.

Der Meßwertaufnehmer 2, der hier entsprechend einem Wirbelstrommeßwertaufnehmer dargestellt ist, kann auch durch beliebige andere Meßwertaufnehmer, die durch eine Quelle gespeist werden müssen, ersetzt werden. Derartige Meßwertaufnehmer können nicht lineare Kennlinien haben, wie sie in Fig. 2 gezeigt sind, also Kennlinien mit beliebiger—aber gleichmäßig stetiger—Krümmung.

Die Vorrichtung wird folgendermaßen betrieben:

Zunächst wird in einem ersten, werksseitigen Abgleich die Ausgangskennlinie des Mußwertaufnehmers mittels des Rechners ermittelt, und zwar, indem man die Kennlinie mit diskreten Meßpunkten aufnimmt. Daraufhin wird mittels des Rechners 7 (oder mit einem anderen Rechner) eine Potenzfunktion der Grundgleichung

$$Y = A + B \left[ \frac{1}{X+W} \right]^D \qquad (G)$$

der ermittelten Kennlinie angefittet, wobei X dem Ausgangssignal des Meßwertaufnehmers und Y dem Meßwert entsprechen. A, B, W und D sind Konstanten.

Die Konstante D wird gespeichert bzw. ausgedruckt, so daß sie jedem Meßwertaufnehmer dieses Typs z.B. als Zahlenwert beigelegt werden kann.

Am Verwendungsort führt man mit dem eingebauten Meßwertaufnehmer 2 mindestens drei Kalibrierungsmessungen mit definierten Kalibrierungsmeßwerten (z.B. Abständen) aus, wobei die Kalibrierungsmeßwerte einmal an der unteren Grenze, einmal an der oberen Grenze und einmal in der Mitte des Meßbereichs liegen.

Daraufhin löst man mittels des Rechners 7 und Vorgabe der Kalibrierungsmeßergebnisse und der Konstanten D die Gleichung (G) und bestimmt daraus die Konstanten A, B, und W. Die Konstanten A, B und W werden im Rechner 7 gespeichert. Nach diesen Vorbereitungen ist das Meßsystem bereits für Betriebsmessungen vorbereitet. Man kann dann das tatsächliche Meßergebnis als X-Wert (im Rechner) in die Gleichung einsetzen und den dazu gehörigen Y-Wert als fehlerkompensierendes Meßergebnis ausgeben. Selbstverständlich wird hierbei ein Multiplikationsfaktor vorgesehen, so daß z.B. einer gemessenen Distanz von 1 mm ein Ausgangswert (gegebenenfalls auch über einen D/A-Wandler eine Ausgangsspannung) von 1 (bzw. von 1 Volt) entspricht.

Vorzugsweise speichert man jedoch nach Ermittlung der Konstanten A und B eine Vielzahl von Lösungspunkten der Gleichung (G) im Rechner und sucht während der Betriebsmessungen lediglich die dem Meßwert entsprechenden korrigierten Meßwerte im Speicher und gibt diese (gegebenenfalls nach Interpolation) aus.

Mit der in Fig. 1 gezeigten Vorrichtung ist es auch möglich, zwischen einzelnen Messungen (nicht unbedingt direkt) nacheinander die zwei verschiedenen Kalibrierungsimpedanzen $R_1$ und $R_2$ anstelle des Meßwertaufnehmers 2 an die Meßschaltung anzukoppeln, wobei die Kalibrierungsimpedanzen $R_1$ und $R_2$ so bemessen sind, daß sie der Impedanz des Meßwertaufnehmers 2 an den Grenzen dessen Meßbereiches entsprechen. Die Kalibrierungsimpedanzmeßwerte werden dann im Mikroprozessor 7 gespeichert.

Während der Betriebsmessungen koppelt man dann immer wieder die Kalibrierungsimpedanzen mittels des über die Leitung 8 vom Mikroprozessor 7 gesteuerten Schalters 3 anstelle des Meßwertaufnehmers 2 an den Demodulator 4 und vergleicht die Meßresultate mit den gespeicherten Kalibrierungsimpedanzmeßwerten. Aus dem Vergleichsergebnis können dann Korrekturwerte zur Kompensation einer gegebenenfalls inzwischen aufgetretenen Null-Punktverschiebung oder einer Änderung des Proportionalitätsfaktor errechnet werden. Diese Korrekturwerte werden dann entweder jedem einzelnen Meßergebnis aufaddiert oder aber man korrigiert im Rechner 7 die gespeicherten Lösungspunkte der Gleichung (G).

Wenn bereits werksseitig der Temperaturgang des Meßwertaufnehmers 2 ermittelt wurde, so kann man mit der in Fig. 1 gezeigten Vorrichtung eine Temperaturkompensation vornehmen. Hierzu schaltet der Mikroprozessor 7 den Umschalter 5 immer wieder auf den Temperaturfühler 10, so daß ein der Temperatur des Meßfühlers 10 proportionales Signal auf den A/D-Wandler 6 und in den Mikroprozessor 7 gelangt. Anhand der im Mikroprozessor 7 gespeicherten Punkte des Temperaturganges der Ausgangskennlinie wird dann das auszugebende Meßergebnis korrigiert. Vorzugsweise steuert hierbei der Mikroprozessor 7 über die Steuerleitung 9 den Schalter 5 relativ selten an und nimmt immer dann eine Korrektur der gespeicherten Lösungspunkte der Gleichung (G) vor, wenn der momentan mit dem Temperaturmeßfühler gemessene Wert von dem bei der vorherigen Temperaturmessung ermittelten um einen wesentlichen Betrag abweicht.

## Patentansprüche

1. Verfahren zur Linearisierung einer nicht linearen, gleichmäßig stetigen Kennlinie eines Meßwertaufnehmers (2) mit einer rechnerunterstützten Meßschaltung, dadurch gekennzeichnet, daß man in einem Schritt

a) bei einem ersten, herstellerseitigen Abgleich die Kennlinie des Meßwertaufnehmers (2) mittels des Rechners (7) durch eine Potenzfunktion der Grundgleichung

$$Y = A + B \cdot \left[ \frac{1}{X+W} \right]^D, \qquad (G)$$

worin X dem Ausgangssignal des Meßwertaufnehmers (2) und Y dem Meßwert entsprechen und A, B, W und D Konstanten sind, so einstellt, daß eine möglichst exakte Linearisierung nachgebildet wird und daß die für die Linearisierung charakteristische Konstante D gespeichert wird, in einem Schritt

b) am Verwendungsort mit dem eingebauten Meßwertaufnehmer (2) mindestens drei Kalibrierungsmessungen mit definierten Kalibrierungswerten vornimmt, die im wesentlichen den Meßbereich des Meßwertaufnehmers (2) äquidistant überspannen, in einem Schritt

c) mit den resultierenden Kalibrierungsmeßergebnissen und der gespeicherten Konstante D die Gleichung (G) zur Bestimmung der Konstanten A, B und W löst und die Konstanten A, B und W speichert und in einem Schritt

d) bei jeder darauffolgenden Betriebsmessung das tatsächliche Meßergebnis als X-Wert einsetzt und den dazu gehörigen Y-Wert als linearisiertes Meßergebnis ausgibt.

2. Verfahren nach Anspruch 1, dadurch gekennzeichnet, daß man nach dem Schritt c) gemäß Anspruch 1 in einem Schritt c') eine den Meßbereich äquidistant überspannende Vielzahl von Lösungspunkten der Gleichung (G) in aufeinanderfolgenden Speicheradressen speichert und in Schritt d) gemäß Anspruch 1 das jeweilige tatsächliche Meßergebnis dem diesem Meßergebnis nächstliegenden Speicherwert zuordnet und die Speicheradresse als den dem Wert X proportionalen Wert ausgibt, vorzugsweise das tatsächliche Meßergebnis dem Interpolationswert zwischen den beiden nächstliegenden Speicherwerten zuordnet und diesen Interpolationswert als dem dem Wert X proportionalen Wert ausgibt.

3. Verfahren nach einem der vorhergehenden Ansprüche, wobei der Meßwertaufnehmer (2) von einer Quelle (1) gespeist wird, dadurch gekennzeichnet, daß man nach Durchführung des Schrittes c) gemäß Anspruch 1 oder c') gemäß Anspruch 2 nacheinander zwei verschiedene Kalibrierungsimpedanzen anstelle des Meßwertaufnehmers (2) an die Meßschaltung ankoppelt, die so bemessen sind, daß die Meßergebnisse bei angekoppelten Meßimpedanzen im wesentlichen in den Randzonen des Meßbereiches des Meßwertaufnehmers (2) liegen, daß man die beiden Kalibrierungsimpedanzmeßwerte speichert und im Schritt d) gemäß Anspruch 1 oder 2 zwischen Betriebsmessungen die beiden Kalibrierungsimpedanzen erneut ankoppelt, die erhaltenen Kalibrierungsimpedanzmeßwerte mit den gespeicherten Kalibrierungsimpedanzmeßwerten vergleicht, anhand des Vergleichs die gespeicherten Konstanten A und B oder O-Punkt und Proportionalitätsfaktor der gesamten Meßanordnung kompensiert.

4. Verfahren nach den Ansprüchen 2 und 3, dadurch gekennzeichnet, daß man die Speicherwerte anhand der Kalibrierungsimpedanzmeßwerte korrigiert.

5. Verfahren nach einem der vorhergehenden Ansprüche, dadurch gekennzeichnet, daß man in Schritt a) gemäß Anspruch 1 zusätzlich den Temperaturgang der Kennlinie bestimmt und mindestens punktweise speichert und in Schritt d) gemäß Anspruch 1 oder 2 zusätzlich die tatsächliche Temperatur des Meßwertaufnehmers (2) detektiert und anhand des Ergebnisses und der gespeicherten Temperaturkennlinienpunkte das ausgegebene Meßergebnis korrigiert.

6. Verfahren nach den Ansprüchen 2 und 5, dadurch gekennzeichnet, daß man die Speicherwerte anhand der bestimmten Temperaturkennlinienpunkte korrigiert.

7. Vorrichtung zur Durchführung des Verfahrens nach einem der Ansprüche 1 bis 3, gekennzeichnet durch

— einen elektrisch steuerbaren Umschalter (3) zum selektiven Verbinden eines ersten Poles mit zweiten bis vierten Polen, an denen jeweils der Meßwertaufnehmer (2) oder Kalibrierungsimpedanzen (R1, R2) angeschlossen sind,

— eine Impedanz (Z$_v$) zwischen einem Oszillator (1) und dem ersten Pol des Umschalters (3),

— einen Demodulator (4), dessen Eingang mit dem ersten Pol des Umschalters (3) und dessen Ausgang zumindest zeitweise mit einem A/D-Wandler (6) verbunden ist,

— einen Mikroprozessor (7) zur herstellerseitigen Linearisierung der Kennlinie des Meßwertaufnehmers (2) durch eine Potenzfunktion der Grundgleichung

$$Y = A + B \cdot \left[ \frac{1}{X+W} \right]^D, \qquad (G)$$

worin X dem Ausgangssignal des Meßwertaufnehmers (2) und Y dem Meßwert entsprechen und A, B, W und D Konstanten sind, zur Bestimmung der Konstanten A, B und W anhand der Gleichung (G) am Verwendungsort des Meßwertaufnehmers (2) und zur Speicherung der Konstanten A, B, W und D, wobei die Dateneingabeschnittstelle des Mikroprozessors (7) mit dem A/D-Wandler (6) verbunden ist und der Mikroprozessor (7) mindestens eine Steuersignalleitung (8) aufweist, die mit dem Steuereingang des Umschalters (3) verbunden ist.

8. Vorrichtung nach Anspruch 7 dadurch gekennzeichnet, daß ein weiterer elektrisch steuerbarer Umschalter (5) vorgesehen ist, der den Eingang des A/D-Wandlers (6) wahlweise mit dem Ausgang des Demodulators (4) oder dem Ausgang eines Temperaturfühlers (10) auf ein Steuersignal des Mikroprozessors (7) hin verbindet.

**Revendications**

1. Procédé pour linéariser une courbe caractéristique non linéaire, continûment monotone, d'un capteur de mesure (2) comportant un circuit de mesure assisté par ordinateur, caractérisé en ce que, lors d'un pas,

a) on règle, lors d'une première compensation effectuée chez le fabricant, la courbe caractéristique du capteur de mesure (2) à l'aide de l'ordinateur (7) au moyen d'une fonction puissance correspondant à l'équation de base

$$Y = A + B \cdot \left[ \frac{1}{X+W} \right]^D \qquad (G)$$

X représentant le signal de sortie du capteur de mesure (2) et Y la valeur de mesure et A, B, W et D étant des constantes, de manière à simuler une linéarisation aussi précise que possible, et on mémorise la constante D caractéristique de la linéarisation, et lors d'un pas

b) on réalise, sur le lieu d'utilisation, avec le capteur de mesure (2) monté, au moins trois mesures de calibrage avec des valeurs de calibrage définies, qui couvrent essentiellement sur la plage de mesure du capteur de mesure (2) en étant équidistantes les unes des autres, et lors d'un pas,

c) on résout, à l'aide des résultats obtenus de mesure et de la constante D mémorisée, l'équation (G) pour déterminer les constantes A, B et W et on mémorise ces constantes A, B et W, et lors d'un pas,

d) on introduit, lors de chaque mesure ultérieure de fonctionnement, le résultat de la mesure effective en tant que valeur X et on délivre la valeur Y, qui lui est associée, en tant que résultat de mesure linéarisé.

2. Procédé selon la revendication 1, caractérisé en ce qu'après le pas c) selon la revendication 1, lors d'un pas c'), on mémorise une multiplicité de points de solutions de l'équation (G), qui couvrent la plage de mesure d'une manière équidistante, à des adresses successives de la mémoire et, lors du pas d) selon la revendication 1, on associe le résultat effectif de mesure respectif à la valeur de mémoire la plus proche de ce résultant de mesure, et on délivre l'adresse de mémoire sous la forme de la valeur proportionnelle à la valeur X, on associe de préférence le résultat effectif de mesure à la valeur d'interpolation entre les deux valeurs de mémoire les plus proches et on délivre cette valeur d'interpolation en tant que valeur proportionnelle à la valeur X.

3. Procédé selon l'une des revendications précédentes, selon lequel le capteur de mesure (2) est alimenté à partir d'une source (1), caractérisé en ce qu'après l'exécution du pas c) selon la revendication 1 ou du pas c') selon la revendication 2, on accouple successivement, au circuit de mesure, à la place du capteur de mesure (2), deux impédances différentes de calibrage, qui sont dimensionnées de telle sorte que, dans le cas d'impédances de mesure accouplées, les résultats de mesure sont situés essentiellement dans les zones marginales de la plage de mesure du capteur de mesure (2), qu'on mémorise les deux valeurs de mesure des impédances de calibrage et que, lors du pas d) selon la revendication 1 ou 2, on accouple à nouveau, entre des mesures de fonctionnement, les deux impédances de calibrage, on compare les valeurs de mesure des impédances de calibrage obtenues aux valeurs mémorisées de mesure des impédances de calibrage et, sur la base de la comparaison, on compense les constantes mémorisées A et B ou le point O et le facteur de proportionnalité de l'ensemble du dispositif de mesure.

4. Procédé selon les revendications 2 et 3, caractérisé en ce qu'on corrige les valeurs de mémoire sur la base des valeurs de mesure des impédances de calibrage.

5. Procédé selon l'une quelconque des revendications précédentes, caractérisé en ce que, lors du pas a) selon la revendication 1, on détermine en outre l'allure en température de la courbe caractéristique et on la mémorise au moins ponctuellement et, lors du pas d) selon la revendication 1 ou 2, on détecte en outre la température effective du capteur de mesure (2) et on corrige le résultat de mesure délivré, sur la base du résultat et des points mémorisés de la courbe caractéristique de température.

6. Procédé selon les revendications 2 et 5, caractérisé en ce qu'on corrige les valeurs de mémoire sur la base des points déterminés de la courbe caractéristique de température.

7. Dispositif pour la mise en oeuvre du procédé selon l'une des revendications 1 à 3, caractérisé par

— un commutateur commandable électriquement (3) servant à relier de façon sélective un premier pôle à des second, troisième et quatrième pôles, auxquels respectivement le capteur de mesure (2) ou des impédances de calibrage (R1, R2) sont raccordées,

— une impédance ($Z_v$) entre un oscillateur (1) et le premier pôle du commutateur (3),

— un démodulateur (4), dont l'entrée est raccordée au premier pôle du commutateur (3) et dont la sortie est raccordée au moins par intervalles à un convertisseur analogique/numérique (6),

— un microprocesseur (7) servant à linéariser, chez le fabricant, la courbe caractéristique du capteur de mesure (2) au moyen d'une fonction puissance correspondant à l'équation de base

$$Y = A + B \cdot \left[ \frac{1}{X+W} \right]^D, \qquad (G)$$

X représentant le signal de sortie du capteur de mesure (2) et Y la valeur de mesure et A, B, W et D étant des constantes, pour la détermination des constantes A, B et W sur la base de l'équation (G) à l'emplacement d'utilisation du capteur de mesure (2) et pour la mémorisation des constantes A, B, W et D, l'interface d'entrée des données du microprocesseur (7) étant reliée au convertisseur analogique/numérique (6), et le microprocesseur (7) possédant au moins une ligne (8) de transmission de signaux, qui est reliée à l'entrée de commande d'un commutateur (3).

8. Dispositif selon la revendication 7, caractérisé en ce qu'il est prévu un autre commutateur électriquement commandable (5), qui relie l'entrée du convertisseur analogique/numérique (6) au choix à la sortie du démodulateur (4) ou à la sortie d'un capteur de température (10), lors de l'apparition d'un signal de commande du microprocesseur (7).

**Claims**

1. A method of linearising a non-linear uniformly constant characteristic of a probe (2) with a computer-assisted measuring circuit, characterised in that in one step

a) in a first manufacturer-performed alignment, the characteristic of the probe (2) is so adjusted by means of the computer (7) by a power function of the basic equation

$$Y = A + B \cdot \left[ \frac{1}{X+W} \right]^D, \qquad (G)$$

in which X corresponds to the output signal from the probe (2) and Y corresponds to the measured value while A, B, W and D are constants, that the most exact linearisation possible is imitated, the constant D which is characteristic of the linearisation being stored, and, in a step

b) at the place of use with the incorporated probe (2) at least three calibration measurements with clearly-defined calibration values are carried out which substantially equidistantly span the measuring range of the probe (2), and in a step

c) with the resultant calibration results and the stored constant D the equation (G) for determining the constants A, B and W is resolved, the constants A, B and W being stored and in a step

d) at each subsequent operational measurement the actual measured result is taken as an X value, the associated Y value being given as a linearised result.

2. A method according to Claim 1, characterised in that after step c) according to Claim 1, in a step c') a plurality of solution points of the equation (G) which equidistantly span the measuring range are stored in successive memory addresses while in step d) according to Claim 1 the relevant actual measured result is associated with the stored value which is closest to this measured result and delivering the memory address as the value proportional to the value X, the actual measured result preferably being associated with the interpolation value between the two closest memory values, this interpolation value being supplied as the value proportional to the value X.

3. A method according to one of the preceding Claims, the probe (2) being supplied from a source (1), characterised in that after carrying out the step c) according to Claim 1 or c') according to Claim 2 two different calibration impedances are coupled to the measuring circuit one after the other instead of the probe (2) and are so dimensioned that the measurement results when the measuring impedances are coupled lie substantially in the marginal zones of the measuring range of the probe (2) and in that the two calibration impedance values are stored and in the step d) according to Claim 1 or 2, between operational measurements the two calibration impedances are again applied, the calibration impedance values obtained being compared with the stored calibration impedance values and on a basis of the comparison the stored constants A and B or O-point and proportionality factor of the whole measuring arrangement can be compensated.

4. A method according to Claims 2 and 3, characterised in that the stored values are corrected on a basis of the calibration impedance values.

5. A method according to one of the preceding Claims, characterised in that in step a) according to Claim 1 the temperature span of the characteristic is additionally determined and stored at least spot-wise and in step d) according to Claim 1 or 2, also the actual temperature of the probe (2) is detected and on a basis of the result and the stored temperature characteristic points so the result of measurement which is actually delivered is corrected.

6. A method according to Claims 2 and 5, characterised in that the stored values are corrected on a basis of the temperature characteristic points which are determined.

7. An apparatus for carrying out the method according to one of Claims 1 to 3, characterised by
— an electrically controllable selector switch (3) for the selective connection of a first terminal to second to fourth terminal at which in each case the probe (2) or calibration impedances (R1, R2) are connected,
— an impedance $(Z_v)$ between an oscillator (1) and the first terminal of the selector switch (3),
— a demodulator (4), the input of which is connected to the first terminal of the selector switch (3) while its output is at least temporarily connected to an analogue/digital convertor (6),

— a microprocessor (7) for manufacturer-performed linearisation of the characteristic of the probe (2) by a power function of the basic equation

$$Y = A + B \cdot \left[ \frac{1}{X+W} \right]^D, \qquad (G)$$

in which X corresponds to the output signal from the probe (2) and Y corresponds to the measured value and A, B, W and D are constants, for determining the constants A, B and W on a basis of the equation (G) at the place of use of the probe (2) and for storing the constants A, B, W and D, the data input interface of the microprocessor (7) being connected to the analogue/digital convertor (6), the microprocessor (7) having at least one control signal line (8) which is connected to the control input of the selector switch (3).

8. An apparatus according to Claim 7, characterised in that a further electrically controllable selector switch (5) is provided which connects the input of the analogue/digital convertor (6) optionally to the output of the demodulator (4) or the output of the temperature sensor (10) in response to a control signal from the microprocessor (7).

# FIG. 1

# FIG. 2